# EUROPÄISCHE PATENTANMELDUNG

(11) **EP 4 640 415 A2**
(43) Veröffentlichungstag der Anmeldung: **29.10.2025**
(21) Anmeldenummer: 25192541.8
(22) Anmeldetag: 10.03.2021
(51) Int. Cl.: B29C 70/80

(54) **VORRICHTUNG ZUM PORTIONIEREN UND POSITIONIEREN EINES FLIESSFÄHIGEN MATERIALS, MASCHINE MIT DER VORRICHTUNG UND VERFAHREN ZUR HERSTELLUNG EINES GEFÄSSVERSCHLUSSES**

(30) Priorität: 13.03.2020 DE 102020106945
(62) Teilanmeldung aus: 21717515.7
(71) Anmelder: Silgan Holdings Inc., Stamford, CT 06901 (US); Silgan White Cap Manufacturing GmbH, 30419 Hannover (DE)
(72) Erfinder: KLEMM, Helmut, 38112 Braunschweig (DE); KRAMER, Ludwig, 49762 Lathen (DE)
(74) Vertreter: Ter Meer Steinmeister & Partner

(57) **Zusammenfassung**

Die Erfindung betrifft eine Vorrichtung zum Portionieren und Positionieren eines fließfähigen Dichtungsmaterials. Durch die Vorrichtung soll ein Einbringen des fließfähigen Materials in einen Gefäßverschluss verbessert werden. Vorgeschlagen wird ein Verfahren zur Herstellung eines Gefäßverschlusses mit einem Dichtungselement, das Verfahren mit den Schritten (a) Bereitstellen eines Gefäßverschlusses, wobei der Gefäßverschluss einen Bodenabschnitt und einen Schürzenabschnitt aufweist; wobei der Bodenabschnitt einen horizontalen Abschnitt aufweist und einen relativ zum horizontalen Abschnitt abgewinkelten Abschnitt aufweist; (b) Ausbringen von fließfähigem Dichtungsmaterial aus einem Ausgang eines Spalts zwischen einem äußeren Element und einem inneren Element einer Maschine; (c) Bewegen einer Vorrichtung in axialer Richtung, die Vorrichtung mit einer Außenseite, einer Innenseite und einer Stirnseite, relativ zu dem äußeren Element und zu dem inneren Element, sodass die Stirnseite der Vorrichtung in Kontakt mit dem aus dem Ausgang ausgebrachten Dichtungsmaterial gerät, das Dichtungsmaterial von dem Ausgang abstreift und das Dichtungsmaterial so in dem Gefäßverschluss positioniert, dass das Dichtungsmaterial zumindest einen Abschnitt des Schürzenabschnitts und zumindest einen Abschnitt des Bodenabschnitts kontaktiert; und (d1) wobei die Innenseite der Vorrichtung den abgewinkelten Abschnitt des Gefäßverschlusses in axialer Richtung überlagert, und/oder (d2) wobei ein Abstand in radialer Richtung zwischen der Außenseite der Vorrichtung und dem Schürzenabschnitt des Gefäßverschlusses maximal 2,0 mm ist.

## Beschreibung

Die Erfindung betrifft Vorrichtungen, Maschinen und Verfahren zur Herstellung von Gefäßverschlüssen. Speziell betrifft die Erfindung die Herstellung von Gefäßverschlüssen mit einem Dichtungselement aus einem PVC-freien Material, beispielsweise aus einem Polymercompound auf Grundlage von thermoplastischen Elastomeren (TPE).

Bei der Herstellung eines PVC-freien Dichtungselements in einem Gefäßverschluss wird ein fließfähiges Dichtungsmaterial, aus dem das Dichtungselement geformt werden soll, in einen Gefäßverschluss(träger) eingebracht. Anschließend wird das Dichtungsmaterial geformt, z.B. gestempelt, um das Dichtungselement zu erzeugen.

WO 2015/181668 A1 offenbart eine Maschine durch die eine Menge von fließfähigem Material ringförmig in einen Gefäßverschluss(träger) eingebracht werden kann.

Die Maschine umfasst ein inneres Kernelement und ein Wandelement, wobei das Wandelement das innere Kernelement umgibt, sodass ein Spalt zwischen dem Kernelement und dem Wandelement gebildet ist. Durch den Spalt kann das fließfähige Material transportiert werden. Außerhalb des Wandelements ist eine Schneide angeordnet, welche durch eine Abwärtsbewegung eine benötigte Materialmenge von einem (oder am) Ausgang s· des Spalts abtrennt und auf den Gefäßverschluss überträgt.

Eine Aufwärtsbewegung der Schneide gibt den Ausgang des Spalts frei, sodass erneut Material aus dem Spaltausgang austreten kann.

Eine ähnliche Maschine offenbart WO 2019/038237 A1, wobei die Stirnseite des Schneidelements konkav geformt ist.

WO 2011/023399 A1 betrifft ein Verfahren zum Aufbringen einer Dichtungsmasse in eine Verschlusskappe für Behälter. GB 2 294896 A beschreibt ein Formen eines Dichtungselements in einem Gefäßverschluss.

Bekannte Maschinen sind insbesondere für Press-on Twist-off (PT) Gefäßverschlüsse ungeeignet.

Die Erfindung steht vor der Aufgabe eine Vorrichtung bereitzustellen, die ein verbessertes Einbringen eines fließfähigen Materials in einen Gefäßverschluss ermöglicht. Insbesondere soll ein verbessertes Einbringen des fließfähigen Materials in einen PT-Verschluss ermöglicht werden.

Gelöst wird die Aufgabe durch eine Vorrichtung nach Anspruch 1, die in einer Maschine nach Anspruch 16 eingesetzt werden kann, durch eine Maschine nach Anspruch 17 oder durch ein Verfahren nach Anspruch 19 oder 28.

Eine Vorrichtung zum Portionieren und Positionieren eines fließfähigen Dichtungsmaterials umfasst einen flanschartigen Abschnitt und einen zylinderartigen Abschnitt. Der flanschartige Abschnitt ist mit dem zylinderartigen Abschnitt verbunden. Der zylinderartige Abschnitt weist eine Stirnseite auf, wobei die Stirnseite an einem Ende des zylinderartigen Abschnitts gelegen ist, das dem flanschartigen Abschnitt abgewandt ist. Die Stirnseite weist eine Fläche auf, die gegenüber einer Achse der Vorrichtung so geneigt ist, dass ein Winkel zwischen der Fläche und der Achse kleiner als 90 ° ist.

Die Vorrichtung kann einstückig ausgebildet sein.

Die Achse kann durch den zylinderartigen Abschnitt definiert sein.

Die Vorrichtung kann ein Metall umfassen, insbesondere kann die Vorrichtung Eisen umfassen. Die Vorrichtung kann aus Metall (Metalllegierung) bestehen.

Die Fläche der Vorrichtung kann sich über zumindest 50% der Stirnseite (der Gesamtfläche der Stirnseite) erstrecken. Speziell erstreckt sich die Fläche über zumindest 60% oder über zumindest 70% der Stirnseite. Besonders bevorzugt erstreckt sich die Fläche über zumindest 80% der Stirnseite oder über zumindest 85% der Stirnseite.

Der zylinderartige Abschnitt kann im Wesentlichen rotationssymmetrisch (um die Achse) sein. Dabei kann sich das im Wesentlichen auf funktionelle Abschnitte des zylinderartigen Abschnitts beziehen und beispielsweise Bohrungen von der Rotationssymmetrie ausnehmen.

Der Winkel zwischen der Fläche der Stirnseite und der Achse kann kleiner als 85 °, speziell kleiner als 80 °, bevorzugt kleiner als 75 °, am meisten bevorzugt kleiner als 70 °, sein.

Der Winkel zwischen der Fläche der Stirnseite und der Achse kann auch größer als 20 °, insbesondere größer als 30 °, bevorzugt größer als 40 °, bevorzugter größer als 50 °, am meisten bevorzugt größer als 60 °, sein.

Insbesondere liegt der Winkel zwischen der Fläche der Stirnseite und der Achse zwischen 20 ° und 85 °, bevorzugter zwischen 30 ° und 85 °, noch bevorzugter zwischen 40 ° und 80 °, s: speziell zwischen 50 ° und 75 °, am meisten bevorzugt zwischen 60 ° und 70 °.

Der zylinderartige Abschnitt kann eine Innenseite, einen ersten Außenseitenabschnitt und einen zweiten Außenseitenabschnitt aufweisen.

Der zweite Außenseitenabschnitt kann relativ zu dem ersten Außenseitenabschnitt abgewinkelt sein.

Der erste Außenseitenabschnitt kann relativ zur Achse einen anderen Winkel aufweisen als der zweite Außenseitenabschnitt relativ zur gleichen Achse.

Der zweite Außenseitenabschnitt kann gegenüber der Achse der Vorrichtung so geneigt sein, dass ein Winkel zwischen der Achse und dem zweiten Außenseitenabschnitt zumindest 0,5 ° beträgt. Der Winkel zwischen der Achse und dem zweiten Außenseitenabschnitt kann auch zumindest 1,0 °, bevorzugt zumindest 1,5 °, bevorzugter zumindest 2,0 °, am meisten bevorzugt zumindest 2,5 °, betragen.

Der Winkel zwischen der Achse und dem zweiten Außenseitenabschnitt kann höchstens 20,0 ° betragen. Ebenso kann der Winkel zwischen der Achse und dem zweiten Außenseitenabschnitt höchstens 15,0 °, bevorzugt höchstens 10,0 °, bevorzugter höchstens 7,0 °, am meisten bevorzugt höchstens 4,0 °, betragen.

Der Winkel zwischen der Achse und dem zweiten Außenseitenabschnitt kann zwischen 0,5 ° und 20,0 ° betragen. Der Winkel zwischen der Achse und dem zweiten Außenseitenabschnitt kann ebenso zwischen 1,0 ° und 15,0 °, bevorzugt zwischen 1,5 ° und 10,0 °, bevorzugter zwischen 2,0 ° und 7,0 °, am meisten bevorzugt zwischen 2,5 ° und 4,0 °, betragen.

Der erste Außenseitenabschnitt kann im Wesentlichen (± 5%) parallel zur Achse der Vorrichtung ausgebildet sein.

Die Innenseite des zylinderartigen Abschnitts kann im Wesentlichen (± 5%) parallel zur Achse der Vorrichtung ausgebildet sein.

Die Stirnseite des zylinderartigen Abschnitts der Vorrichtung kann eine zweite Fläche aufweisen, wobei die zweite Fläche im Wesentlichen (± 5%) senkrecht zur Achse der Vorrichtung gelegen ist.

Die zweite Fläche kann sich an die Innenseite des zylinderartigen Abschnitts (direkt) anschließen.

Die Stirnseite des zylinderartigen Abschnitts der Vorrichtung kann zumindest abschnittsweise mit einer Beschichtung versehen sein.

Speziell kann die zweite Fläche der Stirnseite vollständig mit der Beschichtung versehen sein.

Die Beschichtung kann eine antihaft-Beschichtung und oder eine Gleitbeschichtung sein. Durch eine antihaft-Beschichtung wird das Haften eines Stoffes an der beschichteten Oberfläche gegenüber einer unbeschichteten Oberfläche reduziert sein. Durch eine Gleitbeschichtung wird die Reibung zwischen der beschichteten Fläche und einem Stoff gegenüber der unbeschichteten Fläche reduziert.

Die Beschichtung kann ein Polymer, insbesondere ein Fluorpolymer, umfassen oder daraus bestehen.

Ein Übergang zwischen der Stirnseite des zylinderartigen Abschnitts der Vorrichtung und der Innenseite des zylinderartigen Abschnitts der Vorrichtung kann scharfkantig sein.

Die Fläche der Stirnseite, die zur Achse der Vorrichtung einen Winkel von kleiner als 90 ° aufweist, kann, in einem Schnitt betrachtet, eine geradlinige Kontur aufweisen. Die geradlinige Kontur kann sich über eine Länge von zumindest 1,0 mm, speziell zumindest 2,0 mm erstrecken. Die geradlinige Kontur kann eine Länge von höchstens 20,0 mm, speziell höchstens 10,0 mm aufweisen.

Die Vorrichtung kann in einer Maschine zum Einbringen eines fließfähigen Dichtungsmaterials in einem Gefäßverschluss eingesetzt werden. Die Maschine umfasst ein inneres Element, ein äußeres Element und eine beschriebene Vorrichtung. Das äußere Element umgibt oder umschließt das innere Element so, dass zwischen dem äußeren Element und dem inneren Element ein Spalt gebildet ist. In dem Spalt kann das fließfähige Dichtungsmaterial fließen. Der Spalt weist einen Ausgang auf (der Spalt mündet in einen Ausgang), wobei aus dem Ausgang das fließfähige Dichtungsmaterial ausgebracht werden c kann. Durch eine Bewegung der Vorrichtung (entlang der Achse der Vorrichtung), insbesondere relativ zu dem inneren Element und oder dem äußeren Element, wird Dichtungsmaterial, das aus dem Ausgang fließt oder strömt portioniert und in dem Gefäßverschluss positioniert.

Das äußere Element kann das innere Element zumindest abschnittsweise umschließen oder umgeben.

Die Vorrichtung kann das äußere Element zumindest abschnittsweise umschließen oder umgeben.

Die Vorrichtung und das innere Element und/oder das äußere Element können koaxial angeordnet sein.

Der Spalt kann ein Ringspalt sein.

Das Dichtungsmaterial kann ein thermoplastisches Elastomer umfassen. Auch kann das Dichtungsmaterial PVC-frei sein. Damit das Dichtungsmaterial fließfähig ist, kann das Dichtungsmaterial auf eine Temperatur von über 100°C erwärmt sein.

Eine Maschine zum Einbringen eines fließfähigen Dichtungsmaterials in einen Gegenstand (Gefäßverschluss) umfasst ein äußeres Element, ein inneres Element und eine Vorrichtung. Das äußere Element umgibt das innere Element so, dass zwischen dem äußeren Element und dem inneren Element ein Spalt gebildet ist. In dem Spalt ist das fließfähige Dichtungsmaterial fließfähig. Der Spalt weist einen Ausgang auf, wobei aus dem Ausgang das fließfähige Dichtungsmaterial ausbringbar ist oder ausströmen kann. Die Vorrichtung weist eine Stirnseite auf. Durch eine Bewegung der Vorrichtung ist Dichtungsmaterial, das aus dem Ausgang fließt oder strömt portionierbar und in dem Gegenstand (Gefäßverschluss) positionierbar. Die Stirnseite weist eine Fläche auf, wobei die Fläche, in einem Schnitt betrachtet, eine geradlinige Kontur aufweist (zumindest abschnittsweise). Die geradlinige Kontur erstreckt sich über eine Länge von zumindest 1,0 mm, bevorzugt zumindest 2,0 mm.

Jede der hierin offenbarten Vorrichtungen kann in der Maschine eingesetzt werden.

In einem Verfahren kann ein Gefäßverschluss mit einem Dichtungselement hergestellt werden. Dazu wird ein Gefäßverschluss bereitgestellt. Der Gefäßverschluss weist einen Bodenabschnitt und einen Schürzenabschnitt auf. Der Bodenabschnitt weist einen horizontalen Abschnitt und einen relativ zum horizontalen Abschnitt abgewinkelten Abschnitt auf.

Aus einem Ausgang eines Spalts zwischen einem äußeren Element und einem inneren Element einer Maschine wird fließfähiges Dichtungsmaterial ausgebracht.

Eine Vorrichtung mit einer Außenseite, einer Innenseite und einer Stirnseite wird relativ zu dem äußeren Element und zu dem inneren Element in axialer Richtung (Achse der Vorrichtung) bewegt. Die Stirnseite der Vorrichtung gerät in Kontakt mit dem aus dem Ausgang ausgebrachten Dichtungsmaterial, das Dichtungsmaterial wird von der Stirnseite der Vorrichtung von dem Ausgang abgestreift und das Dichtungsmaterial wird in dem Gefäßverschluss positioniert. Dabei wird das Dichtungsmaterial so positioniert, dass zumindest ein Abschnitt des Schürzenabschnitts und zumindest ein Abschnitt des Bodenabschnitts von dem Dichtungsmaterial kontaktiert werden.

Die Innenseite der Vorrichtung überlagert den abgewinkelten Abschnitt des Gefäßverschlusses in axialer Richtung.

Alternativ oder zusätzlich zu der axialen Überlagerung ist ein Abstand in radialer Richtung zwischen der Außenseite der Vorrichtung und dem Schürzenabschnitt des Gefäßverschlusses maximal 2,0 mm.

Der Schürzenabschnitt des Gefäßverschlusses kann sich im Wesentlichen (±10 ° oder ±5 °) senkrecht zu dem horizontalen Abschnitt des Bodenabschnitts erstrecken.

Der Schürzenabschnitt des Gefäßverschlusses kann sich im Wesentlichen (±10 ° oder ±5 °) parallel zur axialen Richtung der Bewegung der Vorrichtung erstrecken.

Der horizontale Abschnitt des Bodenabschnitts kann senkrecht zur axialen Richtung der Bewegung der Vorrichtung sein.

Die Innenseite (Innenfläche) kann das innere Element und/oder das äußere Element zumindest teilweise, bevorzugt vollständig, umschließen. Die Überlagerung des abgewinkelten Abschnitts des Gefäßverschlusses in axialer Richtung durch die Innenseite der Vorrichtung kann durch eine gedachte Linie oder Fläche, die Innenseite verlängert, realisiert sein.

Der Innendurchmesser des zylinderartigen Abschnitts der Vorrichtung kann größer sein als ein Durchmesser eines horizontalen Abschnitts des Bodenabschnitts (Deckelspiegel).

Der Abstand in radialer Richtung zwischen der Außenseite der Vorrichtung und dem Schürzenabschnitt des Gefäßverschlusses kann der kürzeste Abstand in radialer Richtung zwischen der Außenseite der Vorrichtung und dem Schürzenabschnitt des Gefäßverschlusses sein.

In dem Verfahren kann jede der hierin offenbarten Vorrichtungen eingesetzt werden.

In dem Verfahren kann ebenso jede der hierin offenbarten Maschinen eingesetzt werden.

Der Gefäßverschluss kann einen zweiten abgewinkelten Abschnitt aufweisen. Der zweite abgewinkelte Abschnitt kann relativ zu dem horizontalen Abschnitt abgewinkelt sein. Alternativ oder zusätzlich kann der zweite abgewinkelte Abschnitt relativ zu dem (ersten) abgewinkelten Abschnitt abgewinkelt sein.

Der erste abgewinkelte Abschnitt des Gefäßverschlusses kann sich radial außen an den horizontalen Abschnitt des Gefäßverschlusses anschließen. Alternativ oder zusätzlich kann sich der zweite abgewinkelte Abschnitt des Gefäßverschlusses radial außen an den ersten abgewinkelten Abschnitt anschließen.

Der zweite abgewinkelte Abschnitt kann in den Schürzenabschnitt des Gefäßverschlusses (direkt) übergehen.

Die Vorrichtung, insbesondere die Stirnseite des zylinderartigen Abschnitts der Vorrichtung, kann den zweiten abgewinkelten Abschnitt des Gefäßverschlusses in axialer Richtung überlagern.

Die Vorrichtung, speziell die Stirnseite des zylinderartigen Abschnitts der Vorrichtung, kann sowohl den ersten abgewinkelten Abschnitt als auch den zweiten abgewinkelten Abschnitt des Gefäßverschlusses in axialer Richtung (zumindest abschnittsweise) überlagern.

Der radiale Abstand zwischen der Außenseite der Vorrichtung und dem Schürzenabschnitt des Gefäßverschlusses kann maximal 1,6 mm, bevorzugt maximal 1,4 mm besonders bevorzugt maximal 1,2 mm, sein.

Ebenso kann der Abstand in radialer Richtung zwischen der Außenseite der Vorrichtung und dem Schürzenabschnitt des Gefäßverschlusses zumindest 0,2 mm, bevorzugt zumindest 0,4 mm, besonders bevorzugt zumindest 0,6 mm, betragen.

Insbesondere kann der Abstand in radialer Richtung zwischen der Außenseite der Vorrichtung und dem Schürzenabschnitt des Gefäßverschlusses zwischen 0,2 mm und 1,6 mm, bevorzugt zwischen 0,4 mm und 1,4 mm, besonders bevorzugt zwischen 0,6 mm und 1,2 mm, liegen.

Das Dichtungsmaterial kann nach dem Positionieren in den Gefäßverschluss mechanisch geformt werden. Durch das mechanische Formen kann das Dichtungsmaterial in die gewünschte Form eines Dichtungselements geformt werden.

Speziell wird das Dichtungsmaterial nach dem Positionieren in dem Gefäßverschluss durch ein Stempeln geformt.

Der Gefäßverschluss kann ein Press-on Twist-off Gefäßverschluss sein.

Ein Press-on Twist-off Gefäßverschluss (PT-Gefäßverschluss) wird beim Verschließen eines Gefäßes auf die Gefäßmündung aufgepresst (Press-on) während das Dichtungselement im erwärmten Zustand ausreichend fließfähig ist. Ein Außengewinde im Mündungsbereich eines Gefäßes verursacht ein Innengewinde (als negatives Außengewinde) in dem Dichtungselementbereich auf der Schürze des Gefäßverschlusses. Entfernt wird der PT-Gefäßverschluss von dem Gefäß durch eine Drehbewegung (Twist-off).

Der Gefäßverschluss kann auch ein Nockendrehverschluss sein.

Der Gefäßverschluss kann ein Metall- oder Kunststoff-Gefäßverschluss sein.

Auch kann der Gefäßverschluss ein Composite-PT-Gefäßverschluss sein. Ein solcher Gefäßverschluss wird beispielsweise unter dem Markennamen Band-Guard vertrieben. Dabei kann ein Kunststoffgewinde des Gefäßverschlusses mit einem Gegengewinde eines Gefäßes (zum Beispiel eine Glasgefäß mit Außengewinde) Zusammenwirken.

Allgemein ist unter einem Gefäßverschluss ein Gegenstand zu verstehen, der noch kein vollständig fertiger Gefäßverschluss sein muss. Auch ein Gefäßverschlussträger ohne Dichtungselement wird als Gefäßverschluss bezeichnet.

In einem Verfahren zum Herstellen eines Gefäßverschlusses mit einem Dichtungselement kann ein Gefäßverschluss bereitgestellt werden. Der Gefäßverschluss kann einen Bodenabschnitt und einen Schürzenabschnitt aufweisen. Der Bodenabschnitt kann einen horizontalen Abschnitt aufweisen und in den Bodenabschnitt kann ein umlaufender Kanal gebildet sein.

Aus einem Ausgang eines Spalts zwischen einem äußeren Element und einem inneren Element einer Maschine kann fließfähiges Dichtungsmaterial ausgebracht werden.

Eine Vorrichtung kann in axialer Richtung relativ zu dem äußeren Element und zu dem inneren Element bewegt werden. Dabei kann eine Stirnseite der Vorrichtung mit dem aus dem Ausgang ausgebrachten Dichtungsmaterial in Kontakt geraten. Das Dichtungsmaterial kann von der Stirnseite der Vorrichtung von dem Ausgang abgestreift werden (portionieren). Das Dichtungsmaterial kann von der Stirnseite der Vorrichtung in dem Gefäßverschluss abgelegt (positioniert) werden.

Während der Bewegung der Vorrichtung kann ein Abschnitt des inneren Elements der Maschine an einem Abschnitt des Bodenabschnitts des Gefäßverschlusses anliegen und zeitweise (gleichzeitig) kann sich ein Abschnitt der Vorrichtung in dem Umlaufenden Kanal befinden.

Alternativ oder zusätzlich kann zeitweise während des Bewegens der Vorrichtung ein Abschnitt des inneren Elements der Maschine an einem Abschnitt des Bodenabschnitts des Gefäßverschlusses anliegen und sich ein Abschnitt der Vorrichtung (gleichzeitig) axial unterhalb einer Unterseite des inneren Elements befinden.

Die Unterseite des inneren Elements kann dem Gefäßverschluss zugewandt sein.

Die Unterseite des inneren Elements kann näher zu der Stirnseite des zylinderartigen Abschnitts als zu dem flanschartigen Abschnitt gelegen sein.

Der umlaufende Kanal kann durch einen abgewinkelten Abschnitt des Bodenabschnitts des Gefäßverschlusses definiert sein. Dabei kann der umlaufende Kanal axial unterhalb eines horizontalen Abschnitts des Bodenabschnitts des Gefäßverschlusses liegen. In axialer Richtung kann der umlaufende Kanal durch eine gedachte radiale Verlängerung eines horizontalen Abschnitts (Deckelspiegel) des Bodenabschnitts des Gefäßverschlusses begrenzt sein.

Der Kanal kann radial zwischen einem horizontalen Abschnitt des Bodenabschnitts (Deckelspiegel) des Gefäßverschlusses und der Schürze des Gefäßverschlusses begrenzt sein.

Der Abschnitt der Vorrichtung, der sich zeitweise in dem umlaufenden Kanal befindet, kann ein Abschnitt der Stirnseite des zylinderartigen Abschnitts der Vorrichtung sein.

Der Abschnitt der Vorrichtung, der sich zeitweise axial unterhalb der Unterseite des inneren Elements befindet, kann ein Abschnitt der Stirnseite des zylinderartigen Abschnitts der Vorrichtung sein.

In den Verfahren kann jede der hierin offenbarten Vorrichtungen eingesetzt werden.

In dem Verfahren kann jede der hierin offenbarten Maschinen eingesetzt werden.

Die Stirnseite der Vorrichtung kann eine erste Fläche und eine zweite Fläche aufweisen. Die zweite Fläche kann im Wesentlichen (± 5%) senkrecht zur axialen Bewegungsrichtung der Vorrichtung sein. Die zweite Fläche der Stirnseite der Vorrichtung kann zeitweise vollständig in dem umlaufenden Kanal liegen oder sich darin befinden. Die zweite Fläche der Stirnseite der Vorrichtung kann zeitweise vollständig axial unterhalb der Unterseite des inneren Elements liegen oder sich darunter befinden.

Der Abschnitt der Vorrichtung, der sich zeitweise in dem umlaufenden Kanal befindet, kann eine axiale Erstreckung von zumindest 0,10 mm, bevorzugt zumindest 0,20 mm, noch bevorzugter zumindest 0,30 mm, besitzen. Ebenso kann der Abschnitt der Vorrichtung, der sich zeitweise unterhalb der der Unterseite des inneren Elements befindet, eine axiale Erstreckung von zumindest 0,10 mm, bevorzugt zumindest 0,20 mm, bevorzugter zumindest 0,30 mm, besitzen.

Die Ausführungsformen der Erfindung sind anhand von Beispielen dargestellt; diese sind jedoch nicht auf einer Weise zu verstehen, mit der konkrete Gestaltungen aus den Figuren in die Patentansprüche hineingelesen werden.
Figur 1 zeigt eine Vorrichtung 100 in einer Schnittansicht in axialer Richtung.
Figur 2 zeigt eine vergrößerte Darstellung eines Abschnitts der Vorrichtung 100 aus Figur 1.
Figur 3 zeigt eine noch weitere Vergrößerung eines Abschnitts der Vorrichtung 100 aus Figur 1.
Figur 4 zeigt eine Maschine 200 mit einer Vorrichtung 100.
Figur 5 zeigt eine vergrößerte Darstellung der Maschine 200 aus Figur 4 mit einem Gefäßverschluss 300.
Figur 6 zeigt eine noch weitere Vergrößerung eines Abschnitts der Maschine 200 aus Figur 4.
Figur 7 zeigt die Maschine 200 in der Darstellung der Figur 5 mit Dichtungsmaterial 350.

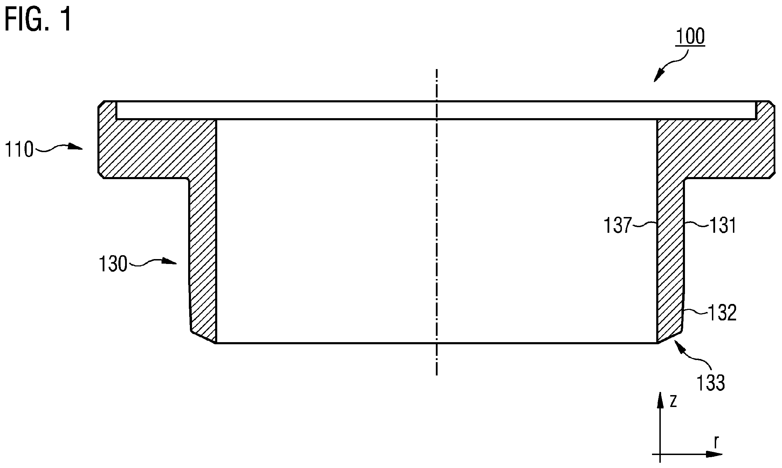

In Figur 1 ist eine Vorrichtung 100 in einer axialen Schnittansicht dargestellt. Eine Achse der Vorrichtung ist mittig angedeutet (z-Richtung). Die Vorrichtung 100 (die auch "Schnittglocke" genannt werden kann, obwohl sie keine Glockenform aufweist) umfasst einen flanschartigen ersten Abschnitt 110 und einen zylinderartigen zweiten Abschnitt 130. Diese können im Winkel von i. W. 90% zueinander ausgerichtet sein (i.W. ist "im Wesentlichen).

Der zylinderartige Abschnitt 130 umfasst einen ersten Außenseitenabschnitt 131 und einen zweiten Außenseitenabschnitt 132. Der erste Außenseitenabschnitt 131 und der zweite Außenseitenabschnitt 132 können die Außenseite des zylinderartigen Abschnitts bilden.

Der zylinderartige Abschnitt 130 umfasst weiterhin eine Innenseite 137, die relativ zur Außenseite radial innengelegen (r-Richtung) ist.

Eine Stirnseite 133 ist zwischen der Innenseite 137 und der Außenseite 131, 132 gebildet und ist axial an dem Ende des zylinderartigen Abschnitts 130 ausgebildet, das dem flanschartigen Abschnitt 110 abgewandt ist.

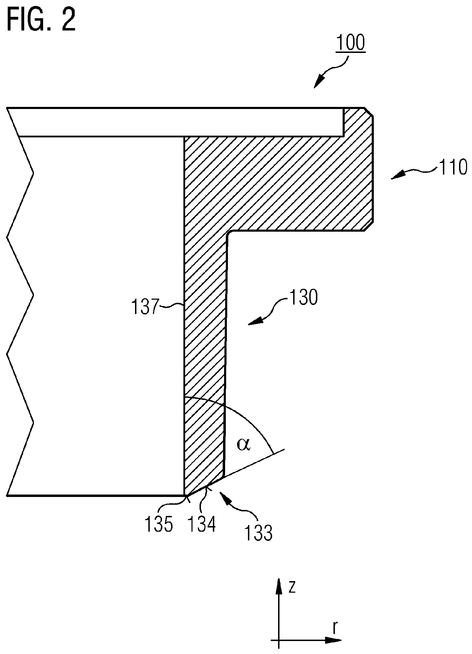

In Figur 2 ist ein vergrößerter Abschnitt der Vorrichtung 100 von Figur 1 dargestellt. Die Stirnseite ISS des zylinderartigen Abschnitts 130 umfasst eine erste Fläche 134. Die Stirnseite 133 kann eine zweite Fläche 135 umfassen.

Die erste Fläche 134 der Stirnseite 133 ist abgewinkelt, dies relativ zur Achse (z-Richtung) der Vorrichtung 100.

Zwischen der Achse der Vorrichtung 100 (in Figur 2 stellvertretend die Innenseite 137 der Vorrichtung 100, die hier parallel zur Achse der Vorrichtung 100 ist) und der ersten Fläche 134 der Stirnseite 133 ist ein Winkel a gebildet. Bevorzugt liegt der Winkel a in einem Bereich zwischen 60 ° und 70 °, besonders bevorzugt liegt der Winkel a bei etwa (± 1%) 65 °.

Die zweite Fläche 135 der Stirnseite 133 ist im Wesentlichen senkrecht zur Achse der Vorrichtung 100 (also auch zur Innenseite 137 der Vorrichtung 100) orientiert.

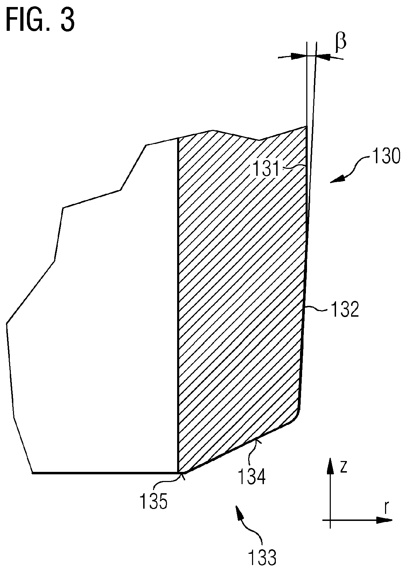

In Figur 3 ist ein stark vergrößerter Abschnitt des zylinderartigen Abschnitts 130 der Vorrichtung 100 mit Blick auf die Stirnseite 133 gezeigt.

Hier ist der erste Außenseitenabschnitt 131 des zylinderartigen Abschnitts 130 parallel zur Achse der Vorrichtung 100. Zwischen der Achse der Vorrichtung (also hier auch zwischen dem ersten Außenseitenabschnitt 131) und dem zweiten Außenseitenabschnitt 132 ist ein Winkel ß (kleiner als 90 ° und ungleich Null) gebildet. Der zweite Außenseitenabschnitt 132 ist also gegenüber der Achse der Vorrichtung 100 geneigt oder abgewinkelt.

Der Winkel ß zwischen dem zweiten Außenseitenabschnitt 132 und der Achse der Vorrichtung 100 kann zwischen 2,5 ° und 4,0 ° liegen, speziell liegt der Winkel ß bei etwa (± 1%) 3 °.

Mit Blick auf die Figuren 1 bis 3 kann die Innenseite 137 des zylinderartigen Abschnitts 130 der Vorrichtung 100 im Wesentlichen parallel zur Achse der Vorrichtung 100 sein.

Der erste Außenseitenabschnitt 131 des zylinderartigen Abschnitts 130 kann im Wesentlichen parallel zur Achse der Vorrichtung 100 sein.

Der zweite Außenseitenabschnitt 132 kann relativ zur Achse der Vorrichtung 100 geneigt oder abgewinkelt sein.

Eine erste Fläche 134 der Stirnseite 133 des zylinderartigen Abschnitts 130 kann relativ zur Achse der Vorrichtung 100 geneigt oder abgewinkelt sein.

Die zweite Fläche 135 der Stirnseite 133 kann im Wesentlichen senkrecht zur Achse der Vorrichtung 100 sein.

Die erste Fläche 134 der Stirnseite 133 kann direkt in die zweite Fläche 135 der Stirnseite 133 übergehen.

Der erste Außenseitenabschnitt 131 kann direkt in den zweiten Außenseitenabschnitt 132 übergehen.

Die zweite Fläche 135 der Stirnseite 133 kann direkt in die Innenseite 137 des zylinderartigen Abschnitts 130 übergehen. Der Übergang kann scharfkantig sein.

Der zweite Außenseitenabschnitt 132 kann direkt in die erste Fläche 134 der Stirnseite übergehen.

Die Vorrichtung 100 kann einstückig ausgebildet sein.

Die Stirnseite 133 kann zumindest abschnittsweise mit einer Beschichtung versehen sein, um ein Abstreifen von Dichtungsmaterial, wie weiter unten beschrieben, zu erleichtern. Insbesondere ist die zweite Fläche 135 der Stirnseite 133 vollständig mit einer Beschichtung versehen, insbesondere mit einer antihaft-Beschichtung und oder mit einer Beschichtung zur Reduzierung der Reibung versehen sein.

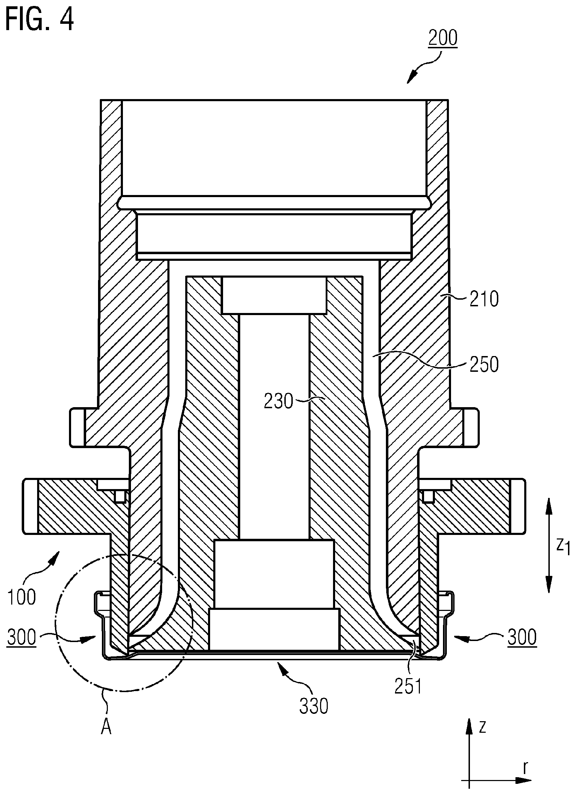

In Figur 4 ist schematisch eine Maschine 200 in einem axialen Schnitt dargestellt.

Die Maschine 200 umfasst ein äußeres Element 210, ein inneres Element 230 und eine Vorrichtung 100. Die Vorrichtung 100 kann eine hierin beschriebene und offenbarte Vorrichtung 100 sein.

Zwischen dem äußeren Element 210 und dem inneren Element 230 ist ein Spalt 250 gebildet. Der Spalt 250 kann ein Ringspalt sein, insbesondere wenn die funktionellen Abschnitte des äußeren Elements 210 und des inneren Elements 230 im Wesentlichen rotationssymmetrisch sind. Der Spalt 250 mündet in einen Ausgang 251, der in der Ansicht der Figur 4 durch die Vorrichtung 100 verschlossen ist.

Die Vorrichtung 100 ist axial relativ zu dem äußeren Element 210 und dem inneren Element 230 beweglich (angedeutet durch den Doppelpfeil z₁ in Figur 4). Eine axiale Bewegung der Vorrichtung 100 kann durch einen Antrieb (nicht dargestellt) bewirkt werden, zum Beispiel durch einen Elektromotor.

Befindet sich die Vorrichtung 100 in einer axial oberen Position (die Vorrichtung 100 und das äußere Element 210 und oder das innere Element 230 sind koaxial) ist der Ausgang 251 des Spalts 250 freigegeben.

In dem Spalt 250 kann ein fließfähiges Dichtungsmaterial (zum Beispiel ein thermoplastisches Elastomer) strömen und, wenn der Ausgang 251 durch die Vorrichtung 100 freigegeben ist, aus dem Ausgang 251 austreten. Das fließfähige Dichtungsmaterial kann durch einen Extruder, der Teil der Maschine 200 sein kann, durch den Spalt 250 befördert werden, um aus dem Ausgang 251 auszutreten.

Ist eine vorbestimmte Menge von fließfähigem Material (Dichtungsmaterial) aus dem Ausgang 251 ausgetreten, kann die Vorrichtung 100 axial nach unten bewegt werden, um die vorbestimmte Menge des Dichtungsmaterials von dem Ausgang 251 abzustreifen. Dabei gerät die Stirnseite der Vorrichtung 100 in Kontakt mit dem - aus dem Ausgang 251 ausgetretenen - Dichtungsmaterial. Der Ausgang ist die Mündung 251 des Kanals 250, der oben Spalt benannt wurde.

Das abgestreifte Dichtungsmaterial wird durch eine weitere axiale Bewegung nach unten der Vorrichtung 100 in Richtung eines Gefäßverschlusses 300 transportiert, sodass das abgestreifte Dichtungsmaterial den Gefäßverschluss kontaktiert.

Eine Adhäsion zwischen dem Gefäßverschluss und dem Dichtungsmaterial ist größer als eine Adhäsion zwischen der Stirnseite der Vorrichtung 100 und dem Dichtungsmaterial, sodass das Dichtungsmaterial in dem Gefäßverschluss 300 verbleibt, wenn die Vorrichtung 100 sich wieder axial nach oben bewegt, um den Ausgang 251 freizugeben.

Der Gefäßverschluss 300 ist dabei relativ zur Maschine 200 so angeordnet, dass das Dichtungsmaterial vorteilhaft in dem Gefäßverschluss positioniert wird.

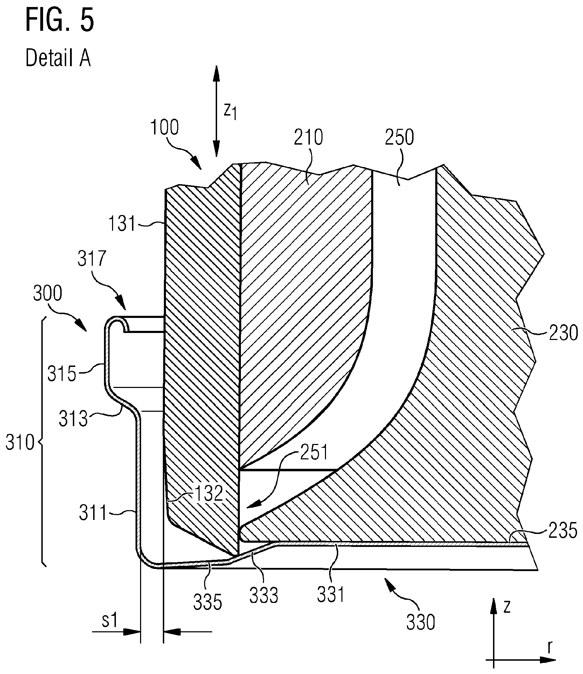

Eine vergrößerte Ansicht eines Abschnitts der Maschine 200 und des Gefäßverschlusses 300 aus Figur 4 (angedeutet durch den Bereich A in Figur 4) ist in Figur 5 dargestellt.

Der Gefäßverschluss 300 umfasst einen Schürzenabschnitt 310 und einen Bodenabschnitt 330.

Der Bodenabschnitt 330 umfasst einen horizontalen Abschnitt 331, der auch als Deckelspiegel bezeichnet wird. Der horizontale Abschnitt 331 (Deckelspiegel) kann einen Safety-Button umfassen. Der Safety-Button kann in dem Deckelspiegel als horizontaler Abschnitt ausgebildet sein.

Radial außen (in r-Richtung) gelegen umfasst der Bodenabschnitt 330 einen ersten abgewinkelten Abschnitt 333. Der erste abgewinkelte Abschnitt 333 kann sich (direkt) an den horizontalen Abschnitt 331 anschließen. Wenn der Gefäßverschluss 300, wie in Figur 5 w dargestellt, auf dem Bodenabschnitt 330 liegend betrachtet wird, sodass sich der Schürzenabschnitt 310 nach axial oben erstreckt, kann sich der erste abgewinkelte Abschnitt 333 relativ zur horizontalen Fläche 331 nach axial unten und radial außen erstrecken (nach axial unten und radial außen abgewinkelt sein).

Der zweite abgewinkelte Abschnitt 335 des Bodenabschnitts 330 kann sich radial (direkt) an den ersten abgewinkelten Abschnitt 333 anschließen. In der Orientierung des Gefäßverschlusses 300 wie in Figur 5 gezeigt und oben beschrieben, kann sich der zweite abgewinkelte Abschnitt 335 nach radial außen und nach axial unten erstrecken.

Der erste abgewinkelte Abschnitt 333 des Bodenabschnitts 330 kann eine relativ zum zweiten abgewinkelten Abschnitt 335 verschiedene Neigung aufweisen, dies insbesondere relativ zum horizontalen Abschnitt 331.

Speziell ist ein Winkel (kleiner als 90°) zwischen dem horizontalen Abschnitt 331 und dem ersten abgewinkelten Abschnitt 333 größer als ein Winkel (kleiner als 90°) zwischen dem horizontalen Abschnitt 331 und dem zweiten abgewinkelten Abschnitt 335. Mit anderen Worten kann die Neigung aus der Horizontalen des ersten abgewinkelten Abschnitts 333 größer sein als die Neigung aus der Horizontalen des zweiten abgewinkelten Abschnitts 335.

An den Bodenabschnitt 330 des Gefäßverschlusses 300 schließt sich, insbesondere über einen Radius, der Schürzenabschnitt 310 an.

Der Schürzenabschnitt umfasst einen ersten axialen (vertikalen oder senkrechten) Abschnitt 311. Der erste axiale Abschnitt 311 kann im Wesentlichen parallel zur Achse des Gefäßverschlusses 300 orientiert sein, oder im Wesentlichen senkrecht zur horizontalen Fläche 331 des Bodenabschnitts 330 orientiert sein.

Der erste axiale Abschnitt 311 kann über einen abgewinkelten Abschnitt 313 der Schürze 310 in einen zweiten axialen (vertikalen oder senkrechten) Abschnitt 315 des Schürzenabschnitts 310 übergehen.

Der abgewinkelte Abschnitt 313 des Schürzenabschnitts 310 erstreckt sich nach radial außen und nach axial oben (in der Orientierung des Gefäßverschlusses 300 wie in Figur 5 gezeigt und oben beschrieben).

Der erste axiale Abschnitt 311 des Schürzenabschnitts 310 kann relativ zum zweiten axialen Abschnitt 315 radial innengelegen sein. Der Durchmesser des Gefäßverschlusses 300 kann also im Bereich des ersten axialen Abschnitts 311 kleiner sein als der Durchmesser des Gefäßverschlusses 300 in einem Bereich des zweiten axialen Abschnitts 315.

Der erste axiale Abschnitt 311 kann (direkt) in den abgewinkelten Abschnitt 313 des Schürzenabschnitts 310 übergehen. Der zweite axiale Abschnitt 315 kann sich (direkt) an den abgewinkelten Abschnitt 313 des Schürzenabschnitts 310 anschließen.

Der zweite abgewinkelte Abschnitt 335 des Bodenabschnitts 330 kann (direkt), insbesondere über einen Radius, in den ersten axialen Abschnitt 311 des Schürzenabschnitts 310 übergehen.

Der Schürzenabschnitt S10 kann eine Rollung (curl) 317 umfassen. Die Rollung 317 kann an einem axialen Ende des Schürzenabschnitts 310 ausgebildet sein. Die Rollung 317 kann eine Innenrollung sein. Die Rollung 317 kann also nach radial innen orientiert sein.

Zwischen dem äußeren Element 210 und dem inneren Element 2S0 der Maschine 200 ist der Spalt 250 gebildet. Der Spalt 250 mündet in den Ausgang 251, wobei der Ausgangsbereich des Spalts 250 nach radial außen und axial unten orientiert ist.

Bei der Herstellung eines Gefäßverschlusses 300 (Einbringen eines Dichtungsmaterials und Formen des Materials zu einem Dichtungselement) kann der Bodenabschnitt 330 des Gefäßverschlusses 300, insbesondere die horizontale Fläche (horizontaler Abschnitt) 331, an einem Abschnitt, insbesondere einer axialen Unterseite 235, des inneren Elements 230 der Maschine 200 anliegen.

Zwischen der Außenseite 131, 132 der Vorrichtung 100 und dem Schürzenabschnitt 310 ist ein Abstand s1 vorhanden. Insbesondere ist der Abstand s1 der kleinste Abstand zwischen der Außenseite 131, 132 der Vorrichtung 100 und dem Schürzenabschnitt 310. Der Abstand s1 kann zwischen dem ersten Außenabschnitt 131 der Vorrichtung 100 und dem ersten axialen Abschnitt 311 des Schürzenabschnitts 310 gebildet sein.

Der Abstand s1 kann (ausschließlich) in radialer Richtung betrachtet sein.

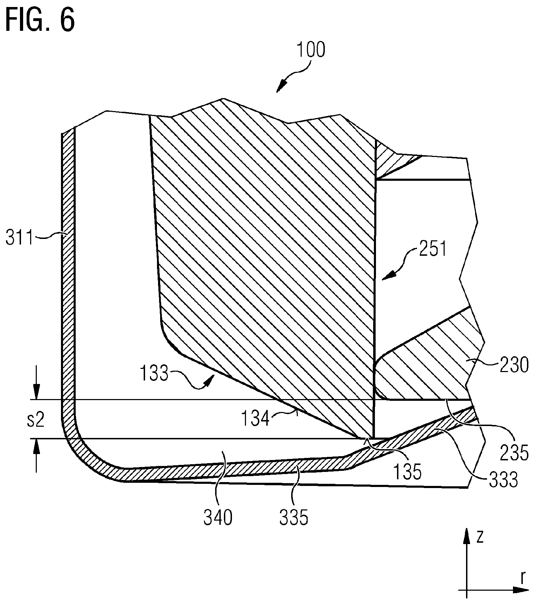

In Figur 6 ist eine noch weitere Vergrößerung des Abschnitts A aus Figur 4 dargestellt.

In dem Bodenabschnitt 330 des Gefäßverschlusses 300 kann ein Kanal 340 gebildet sein. Der Kanal 340 kann vollständig umlaufend ausgebildet sein. Der Kanal 340 kann zwischen der horizontalen Fläche (horizontaler Abschnitt) 331 des Bodenabschnitts 330 und dem ersten axialen Abschnitt 311 des Schürzenabschnitts 310 gelegen sein.

Der Kanal 340 kann durch den ersten abgewinkelten Abschnitt 333 und durch den zweiten abgewinkelten Abschnitt 335 des Bodenabschnitts 330 gebildet sein.

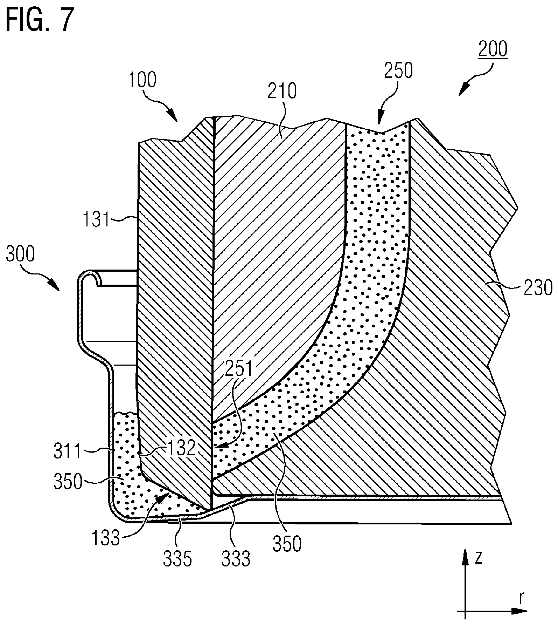

Die Vorrichtung 100 befindet sich in Figur 6 (siehe auch Figuren 4, 5 und 7) in einer axial untersten Position relativ zum äußeren Element 210 und relativ zum inneren Element 230 der Maschine 200. In dieser Position wird das Dichtungsmaterial (siehe hierzu auch Figur 7) in dem Gefäßverschluss 300 positioniert, bevor die Vorrichtung 100 axial nach oben bewegt wird, um den Ausgang 251 des Kanals 250 freizugeben.

Die Stirnseite 133 der Vorrichtung 100 überlagert in axialer Richtung den ersten abgewinkelten Abschnitt 333 des Bodenabschnitts 330. Die Stirnseite 133 der Vorrichtung 100 kann in axialer Richtung auch (zusätzlich oder alternativ) den zweiten abgewinkelten Abschnitt 335 des Bodenabschnitts 330 überlagern.

Die Vorrichtung 100 kann relativ zum äußeren Element 210 und zum inneren Element 230 soweit nach unten bewegt werden, dass ein Abschnitt der Vorrichtung 100 axial unterhalb der Unterseite 235 des inneren Elements 230 gelegen ist. Dies zeitweise während der Bewegung der Vorrichtung 100. Insbesondere liegt ein Abschnitt der Stirnseite 133 axial unterhalb der Unterseite 235 des inneren Elements 230. Bevorzugt liegt die zweite Fläche 135 der Stirnseite 133 (axial) vollständig unterhalb der Unterseite 235 des inneren Elements 230. Dies in der Position der Vorrichtung 100 relativ zur Maschine 200 wie in Figur 6 gezeigt.

Zwischen der Unterseite 235 des inneren Elements 230 und einem Abschnitt der Stirnseite 133 der Vorrichtung 100 kann zeitweise während der Bewegung der Vorrichtung 100 ein axialer Abstand s2 gebildet sein. Dabei kann der Abschnitt der Stirnseite 133 axial unterhalb der Unterseite 235 des inneren Elements 230 gelegen sein.

Der Kanal 340 in dem Bodenabschnitt 330 des Gefäßverschlusses 300 kann axial nach oben durch eine gedachte Verlängerung der horizontalen Fläche 235 des Bodenabschnitts 330 begrenzt sein.

In der Position der Vorrichtung 100 wie in Figur 6 gezeigt, liegt ein Abschnitt der Vorrichtung 100 in dem Kanal 340. Speziell liegt ein Abschnitt der Stirnseite 133 der Vorrichtung 100 in dem Kanal 340 (zeitweise während der Bewegung der Vorrichtung 100). Speziell liegt die zweite Fläche der Stirnseite 133 vollständig in dem Kanal 340.

In Figur 7 ist veranschaulicht, wie ein fließfähiges Dichtungsmaterial durch die Maschine 200 in dem Gefäßverschluss 300 positioniert wird.

Das fließfähige Dichtungsmaterial 350 wurde in dem Spalt 250 zwischen dem äußeren Element 210 und dem inneren Element 230 in Richtung des Ausgangs 251 transportiert. Während die Vorrichtung 100 relativ zu dem äußeren Element 210 und dem inneren Element 230 so positioniert war, dass der Ausgang 251 freigegeben war, ist eine Menge des fließfähigen Dichtungsmaterials 350 aus dem Ausgang 251 ausgeströmt. Durch eine Bewegung der Vorrichtung 100 relativ zum äußeren Element 210 und zum inneren Element 230 nach axial unten (in die axial unterste Position) wurde das Dichtungsmaterial 350 von dem Ausgang 251 abgestreift und nach axial unten in dem s: Gefäßverschluss 300 so positioniert wie in Figur 7 angedeutet.

Die Geometrie der Stirnseite 133 der Vorrichtung 100 und der Außenseite 131, 132 formt das Dichtungsmaterial 350 in dem Gefäßverschluss 300 vor. Speziell wird dem Dichtungsmaterial 350 die Form durch die Stirnseite 133 der Vorrichtung 100 und durch den zweiten Außenseitenabschnitt 132 verliehen.

Bei einer Bewegung der Vorrichtung 100 relativ zum äußeren Element 210 und zum inneren Element 230 nach axial oben verbleibt das in dem Gefäßverschluss 300 vorgeformte Dichtungsmaterial 350 in dem Gefäßverschluss im Wesentlichen in der vorgeformten Form.

Das Dichtungsmaterial 350 kann in dem Gefäßverschluss 300 vollständig umlaufend ausgebildet sein, insbesondere kreisringartig.

Nach dem Vorformen des Dichtungsmaterials 350 in dem Gefäßverschluss 300 kontaktiert das Dichtungsmaterial 350 einen Abschnitt des Bodenabschnitts 330 des Gefäßverschlusses 300 und einen Abschnitt des Schürzenabschnitts 310 des Gefäßverschlusses 300.

Speziell kontaktiert das Dichtungsmaterial 350 nach dem Vorformen einen Abschnitt des ersten axialen Abschnitts 311 des Schürzenabschnitts 310 (teilweise), einen Abschnitt des zweiten abgewinkelten Abschnitts 335 des Bodenabschnitts 330 (vollständig) und einen Abschnitt des ersten abgewinkelten Abschnitts 333 des Bodenabschnitts 330 (teilweise).

Nach dem Vorformen des Dichtungsmaterials 350 in dem Gefäßverschluss 300 kann das Dichtungsmaterial 350 mechanisch in eine Endform gebracht werden, sodass ein Dichtungselement in dem Gefäßverschluss 300 gebildet ist. Speziell wird das Formen des Dichtungselements durch ein Stempeln erreicht.

Allgemein kann der Außendurchmesser des Gefäßverschlusses 300 zwischen 20 mm und 120 mm liegen, bevorzugt zwischen 30 mm und 100 mm, noch bevorzugter zwischen 40 mm und 80 mm.

Nachfolgend sind nummerierte Beispiele beschrieben. Die vorangestellte Zahl steht für die Nummer des Beispiels.
1. Vorrichtung zum Portionieren und Positionieren eines fließfähigen Dichtungsmaterials, die Vorrichtung (100) mit einem flanschartigen Abschnitt (110) und einem zylinderartigen Abschnitt (130), wobei
   (a) der flanschartige Abschnitt (110) mit dem zylinderartigen Abschnitt (130) verbunden ist;
   (b) der zylinderartige Abschnitt (130) eine Stirnseite (133) aufweist, die an einem Ende des zylinderartigen Abschnitts (130) gelegen ist, das dem flanschartigen Abschnitt (110) abgewandt ist; und
   (c) die Stirnseite (133) eine Fläche (134) aufweist, die gegenüber einer Achse der Vorrichtung (100) so geneigt ist, dass ein Winkel (α) zwischen der Fläche (134) und der Achse kleiner als 90 ° ist.
2. Vorrichtung nach Beispiel 1, wobei sich die Fläche (134) über zumindest 50 % der Stirnseite (133) erstreckt, bevorzugt über zumindest 60 %, bevorzugter über zumindest 70 %, noch bevorzugter über zumindest 80 %, am meisten bevorzugt über zumindest 85 %.
3. Vorrichtung nach einem der vorhergehenden Beispiele, wobei der zylinderartige Abschnitt (130) im Wesentlichen rotationssymmetrisch ist.
4. Vorrichtung nach einem der vorhergehenden Beispiele, wobei der Winkel (α) zwischen der Fläche (134) der Stirnseite (133) und der Achse kleiner als 85 °, bevorzugt kleiner als 80 °, bevorzugter kleiner als 75 °, am meisten bevorzugt kleiner als 70 ° ist.
5. Vorrichtung nach einem der vorhergehenden Beispiele, wobei der Winkel (α) zwischen der Fläche (134) der Stirnseite (133) und der Achse größer als 20 °, bevorzugt größer als 30 °, bevorzugter größer als 40 °, noch bevorzugter größer als 50 °, am meisten bevorzugt größer als 60 ° ist.
6. Vorrichtung nach einem der vorhergehenden Beispiele, wobei der zylinderartige Abschnitt (130) eine Innenseite (137), einen ersten Außenseitenabschnitt (131) und einen zweiten Außenseitenabschnitt (132) aufweist, bevorzugt der zweite Außenseitenabschnitt (132) relativ zu dem ersten Außenseitenabschnitt (131) abgewinkelt ist.
7. Vorrichtung nach Beispiel 6, wobei der zweite Außenseitenabschnitt (132) gegenüber der Achse der Vorrichtung (100) so geneigt ist, dass ein Winkel (ß) zwischen der Achse und dem zweiten Außenseitenabschnitt (132) zumindest 0,5 ° beträgt, bevorzugt der Winkel (ß) zumindest 1,0 ° beträgt, bevorzugter der Winkel (ß) zumindest 1,5 ° beträgt, noch bevorzugter der Winkel (ß) zumindest 2,0 ° beträgt, am meisten bevorzugt der Winkel (ß) zumindest 2,5 ° beträgt.
8. Vorrichtung nach Beispiel 6 oder 7, wobei der Winkel (ß) zwischen der Achse und dem zweiten Außenseitenabschnitt (132) höchstens 20,0 ° beträgt, bevorzugt der Winkel (ß) höchstens 15,0 ° beträgt, bevorzugter der Winkel (ß) höchstens 10,0 ° beträgt, noch bevorzugter der Winkel (ß) höchstens 7,0 ° beträgt, am meisten bevorzugt der Winkel (ß) höchstens 4,0 ° beträgt.
9. Vorrichtung nach einem der Beispiele 6 bis 8, wobei der erste Außenseitenabschnitt (131) im Wesentlichen parallel zur Achse der Vorrichtung (100) ausgebildet ist.
10. Vorrichtung nach einem der Beispiele 6 bis 9, wobei die Innenseite (137) im Wesentlichen parallel zur Achse der Vorrichtung (100) ausgebildet ist.
11. Vorrichtung nach einem der vorhergehenden Beispiele, wobei die Stirnseite (133) eine zweite Fläche (135) aufweist, die im Wesentlichen senkrecht zur Achse der Vorrichtung (100) gelegen ist.
12. Vorrichtung nach Beispiel 11, wobei sich die zweite Fläche (135) an die Innenseite (137) des zylinderartigen Abschnitts (130) anschließt.
13. Vorrichtung nach einem der vorhergehenden Beispiele, wobei die Stirnseite (133) zumindest abschnittsweise mit einer Beschichtung versehen ist, bevorzugt die zweite Fläche (135) der Stirnseite (133) vollständig mit einer Beschichtung versehen ist.
14. Vorrichtung nach einem der vorhergehenden Beispiele, wobei ein Übergang zwischen der Stirnseite (133) und der Innenseite (137) des zylinderartigen Abschnitts (136b) scharfkantig ist.
15. Vorrichtung nach einem der vorhergehenden Beispiele, wobei die Fläche (134) eine, in einem Schnitt betrachtet, geradlinige Kontur aufweist, die sich über eine Länge von zumindest 1,0 mm, insbesondere zumindest 2,0 mm, erstreckt.
16. Maschine zum Einbringen eines fließfähigen Dichtungsmaterials in einen Gefäßverschluss (300), die Maschine (200) mit einem äußeren Element (210), einem inneren Element (230) und einer Vorrichtung (100) nach einem der vorhergehenden Beispiele, wobei
   (a) das äußere Element (210) das innere Element (230) so umgibt, dass zwischen dem äußeren Element (210) und dem inneren Element (230) ein Spalt (250) gebildet ist, in dem das fließfähige Dichtungsmaterial fließfähig ist;
   (b) der Spalt (250) einen Ausgang (251) aufweist, aus dem das fließfähige Dichtungsmaterial ausbringbar ist; und
   (c) Dichtungsmaterial, das aus dem Ausgang (251) fließt, durch eine Bewegung der Vorrichtung (100) portionierbar und in dem Gefäßverschluss (300) positionierbar ist.
17. Maschine zum Einbringen eines fließfähigen Dichtungsmaterials in einen Gegenstand (300), die Maschine (200) mit einem äußeren Element (210), einem inneren Element (230) und einer Vorrichtung (100), wobei
   (a) das äußere Element (210) das innere Element (230) so umgibt, dass zwischen dem äußeren Element (210) und dem inneren Element (230) ein Spalt (250) gebildet ist, in dem das fließfähige Dichtungsmaterial fließfähig ist;
   (b) der Spalt (250) einen Ausgang (251) aufweist, aus dem das fließfähige Dichtungsmaterial ausbringbar ist;
   (c) die Vorrichtung (100) eine Stirnseite (133) aufweist und Dichtungsmaterial, das aus dem Ausgang (251) fließt, durch eine Bewegung der Vorrichtung (100) portionierbar und in dem Gegenstand (300) positionierbar ist; und
   (d) die Stirnseite eine Fläche (134) mit einer, in einem Schnitt betrachtet, geradlinigen Kontur aufweist, die sich über eine Länge von zumindest 1,0 mm erstreckt.
18. Maschine nach Beispiel 17, wobei die Vorrichtung (100) eine Vorrichtung (100) nach einem der Beispiele 1 bis 15 ist.
19. Verfahren zur Herstellung eines Gefäßverschlusses (300) mit einem Dichtungselement, das Verfahren mit den Schritten ...
   (a) Bereitstellen eines Gefäßverschlusses (300), wobei der Gefäßverschluss (300) einen Bodenabschnitt (330) und einen Schürzenabschnitt (310) aufweist; wobei der Bodenabschnitt (310) einen horizontalen Abschnitt (331) aufweist und einen relativ zum horizontalen Abschnitt (331) abgewinkelten Abschnitt (333) aufweist;
   (b) Ausbringen von fließfähigem Dichtungsmaterial (350) aus einem Ausgang (251) eines Spalts (250) zwischen einem äußeren Element (210) und einem inneren Element (230) einer Maschine (200);
   (c) Bewegen einer Vorrichtung (100) in axialer Richtung, die Vorrichtung (100) mit einer Außenseite (131,132), einer Innenseite (137) und einer Stirnseite (133), relativ zu dem äußeren Element (210) und zu dem inneren Element (230), sodass die Stirnseite (133) der Vorrichtung (100) in Kontakt mit dem aus dem Ausgang (251) ausgebrachten Dichtungsmaterial (350) gerät, das Dichtungsmaterial (350) von dem Ausgang (251) abstreift und das Dichtungsmaterial (350) so in dem Gefäßverschluss (300) positioniert, dass das Dichtungsmaterial (350) zumindest einen Abschnitt des Schürzenabschnitts (310) und zumindest einen Abschnitt des Bodenabschnitts (330) kontaktiert; und
   (d1) wobei die Innenseite (137) der Vorrichtung (100) den abgewinkelten Abschnitt (333) des Gefäßverschlusses (300) in axialer Richtung überlagert,
      und/oder
   (d2) wobei ein Abstand (s1) in radialer Richtung zwischen der Außenseite (131,132) der Vorrichtung (100) und dem Schürzenabschnitt (310) des Gefäßverschlusses (300) maximal 2,0 mm ist.
20. Verfahren nach Beispiel 19, wobei die Vorrichtung (100) eine Vorrichtung (100) nach einem der Beispiele 1 bis 15 ist und/oder wobei die Maschine (200) eine Maschine (200) nach einem der Beispiele 16 bis 18 ist.
21. Verfahren nach Beispiel 19 oder 20, wobei der Gefäßverschluss (300) einen zweiten abgewinkelten Abschnitt (335) aufweist, der relativ zu dem horizontalen Abschnitt (331) und relativ zu dem (ersten) abgewinkelten Abschnitt (333) abgewinkelt ist.
22. Verfahren nach Beispiel 21, wobei sich der erste abgewinkelte Abschnitt (333) radial außen an den horizontalen Abschnitt (331) anschließt und sich der zweite abgewinkelte Abschnitt (335) radial außen an den ersten abgewinkelten Abschnitt (333) anschließt.
23. Verfahren nach Beispiel 21 oder 22, wobei die Außenseite (131,132) der Vorrichtung (100) den zweiten abgewinkelten Abschnitt (335) des Gefäßverschlusses in axialer Richtung überlagert.
24. Verfahren nach einem der Beispiele 19 bis 23, wobei der Abstand (s1) in radialer Richtung zwischen der Außenseite (131,132) der Vorrichtung (100) und dem Schürzenabschnitt (310) des Gefäßverschlusses (300) maximal 1,6 mm, bevorzugt maximal 1,4 mm, bevorzugter maximal 1,2 mm, ist.
25. Verfahren nach einem der Beispiele 19 bis 24, wobei der Abstand (s1) in radialer Richtung zwischen der Außenseite (131,132) der Vorrichtung (100) und dem Schürzenabschnitt (310) des Gefäßverschlusses (300) zumindest 0,2 mm, bevorzugt zumindest 0,4 mm, bevorzugter zumindest 0,6 mm, ist.
26. Verfahren nach einem der Beispiele 19 bis 25, wobei das Dichtungsmaterial (350) nach dem Positionieren in dem Gefäßverschluss (300) mechanisch, insbesondere durch Stempeln, geformt wird.
27. Verfahren nach einem der Beispiele 19 bis 26, wobei der Gefäßverschluss (300) ein Press-on Twist-off Gefäßverschluss ist.
28. Verfahren zur Herstellung eines Gefäßverschlusses (300) mit einem Dichtungselement, das Verfahren mit den Schritten:
   (a) Bereitstellen eines Gefäßverschlusses (300), wobei der Gefäßverschluss (300) einen Bodenabschnitt (330) und einen Schürzenabschnitt (310) aufweist; wobei der Bodenabschnitt (330) einen horizontalen Abschnitt (331) aufweist und in dem Bodenabschnitt (330) ein umlaufender Kanal (340) gebildet ist;
   (b) Ausbringen von fließfähigem Dichtungsmaterial (350) aus einem Ausgang (251) eines Spalts (250) zwischen einem äußeren Element (210) und einem inneren Element (230) einer Maschine (200);
   (c) Bewegen einer Vorrichtung (100) in axialer Richtung relativ zu dem äußeren Element (210) und zu dem inneren Element (230), sodass eine Stirnseite (133) der Vorrichtung (100) in Kontakt mit dem aus dem Ausgang (251) ausgebrachten Dichtungsmaterial (350) gerät, das Dichtungsmaterial (350) von dem Ausgang (251) abstreift und das Dichtungsmaterial (350) in dem Gefäßverschluss (300) positioniert; und
   (d1) wobei zeitweise während des Bewegens der Vorrichtung (100) ein Abschnitt des inneren Elements (230) der Maschine (200) an einem Abschnitt des Bodenabschnitts (330) des Gefäßverschlusses (300) anliegt und sich ein Abschnitt der Vorrichtung (100) in dem umlaufenden Kanal (340) befindet,
      und/oder
   (d2) wobei zeitweise während des Bewegens der Vorrichtung (100) ein Abschnitt des inneren Elements (230) der Maschine (200) an einem Abschnitt des Bodenabschnitts (330) des Gefäßverschlusses (300) anliegt und sich ein Abschnitt der Vorrichtung (100) axial unterhalb einer Unterseite (235) des inneren Elements (230) befindet.
29. Verfahren nach Beispiel 28, wobei die Vorrichtung (100) eine Vorrichtung (100) nach einem der Beispiele 1 bis 15 ist und/oder wobei die Maschine (200) eine Maschine (200) nach einem der Beispiele 16 bis 18 ist.
30. Verfahren nach einem der Beispiele 28 oder 29, wobei die Stirnseite (133) der Vorrichtung (100) eine erste Fläche (134) und eine zweite Fläche (135) aufweist, wobei die zweite Fläche (135) im Wesentlichen senkrecht zur axialen Bewegungsrichtung der Vorrichtung (100) ist und sich die zweite Fläche (135) zeitweise vollständig in dem umlaufenden Kanal (340) befindet und/oder sich die zweite Fläche (135) zeitweise vollständig axial unterhalb der Unterseite (235) des inneren Elements (230) befindet.
31. Verfahren nach einem der Beispiele 28 bis 30, wobei der Abschnitt der Vorrichtung (100), der sich zeitweise in dem umlaufenden Kanal (340) befindet, eine axiale Erstreckung von zumindest 0,10 mm, bevorzugt zumindest 0,20 mm, bevorzugter zumindest 0,30 mm, besitzt.
32. Verfahren nach einem der Beispiele 28 bis 31, wobei der Abschnitt der Vorrichtung (100), der sich zeitweise unterhalb der Unterseite (235) des inneren Elements (230) befindet, eine axiale Erstreckung von zumindest 0,10 mm, bevorzugt zumindest 0,20 mm, bevorzugter zumindest 0,30 mm, besitzt.

## Patentansprüche

1. Verfahren zur Herstellung eines Gefäßverschlusses (300) mit einem Dichtungselement, das Verfahren mit den Schritten:
(a) Bereitstellen eines Gefäßverschlusses (300), wobei der Gefäßverschluss (300) einen Bodenabschnitt (330) und einen Schürzenabschnitt (310) aufweist; wobei der Bodenabschnitt (310) einen horizontalen Abschnitt (331) aufweist und einen relativ zum horizontalen Abschnitt (331) abgewinkelten Abschnitt (333) aufweist;
(b) Ausbringen von fließfähigem Dichtungsmaterial (350) aus einem Ausgang (251) eines Spalts (250) zwischen einem äußeren Element (210) und einem inneren Element (230) einer Maschine (200);
(c) Bewegen einer Vorrichtung (100) in axialer Richtung, die Vorrichtung (100) mit einer Außenseite (131,132), einer Innenseite (137) und einer Stirnseite (133), relativ zu dem äußeren Element (210) und zu dem inneren Element (230), sodass die Stirnseite (133) der Vorrichtung (100) in Kontakt mit dem aus dem Ausgang (251) ausgebrachten Dichtungsmaterial (350) gerät, das Dichtungsmaterial (350) von dem Ausgang (251) abstreift und das Dichtungsmaterial (350) so in dem Gefäßverschluss (300) positioniert, dass das Dichtungsmaterial (350) zumindest einen Abschnitt des Schürzenabschnitts (310) und zumindest einen Abschnitt des Bodenabschnitts (330) kontaktiert; und
(d1) wobei die Innenseite (137) der Vorrichtung (100) den abgewinkelten Abschnitt (333) des Gefäßverschlusses (300) in axialer Richtung überlagert,
und/oder
(d2) wobei ein Abstand (s1) in radialer Richtung zwischen der Außenseite (131,132) der Vorrichtung (100) und dem Schürzenabschnitt (310) des Gefäßverschlusses (300) maximal 2,0 mm ist.

2. Verfahren nach Anspruch 1, wobei der Gefäßverschluss (300) einen zweiten abgewinkelten Abschnitt (335) aufweist, der relativ zu dem horizontalen Abschnitt (331) und relativ zu dem (ersten) abgewinkelten Abschnitt (333) abgewinkelt ist.

3. Verfahren nach Anspruch 2, wobei sich der erste abgewinkelte Abschnitt (333) radial außen an den horizontalen Abschnitt (331) anschließt und sich der zweite abgewinkelte Abschnitt (335) radial außen an den ersten abgewinkelten Abschnitt (333) anschließt.

4. Verfahren nach Anspruch 2 oder 3, wobei die Außenseite (131,132) der Vorrichtung (100) den zweiten abgewinkelten Abschnitt (335) des Gefäßverschlusses in axialer Richtung überlagert.

5. Verfahren nach einem der Ansprüche 1 bis 4, wobei der Abstand (s1) in radialer Richtung zwischen der Außenseite (131,132) der Vorrichtung (100) und dem Schürzenabschnitt (310) des Gefäßverschlusses (300) maximal 1,6 mm, bevorzugt maximal 1,4 mm, bevorzugter maximal 1,2 mm, ist.

6. Verfahren nach einem der Ansprüche 1 bis 5, wobei der Abstand (s1) in radialer Richtung zwischen der Außenseite (131,132) der Vorrichtung (100) und dem Schürzenabschnitt (310) des Gefäßverschlusses (300) zumindest 0,2 mm, bevorzugt zumindest 0,4 mm, bevorzugter zumindest 0,6 mm, ist.

7. Verfahren nach einem der Ansprüche 1 bis 6, wobei das Dichtungsmaterial (350) nach dem Positionieren in dem Gefäßverschluss (300) mechanisch, insbesondere durch Stempeln, geformt wird.

8. Verfahren nach einem der Ansprüche 1 bis 7, wobei der Gefäßverschluss (300) ein Press-on Twist-off Gefäßverschluss ist.

9. Verfahren zur Herstellung eines Gefäßverschlusses (300) mit einem Dichtungselement, das Verfahren mit den Schritten:
(a) Bereitstellen eines Gefäßverschlusses (300), wobei der Gefäßverschluss (300) einen Bodenabschnitt (330) und einen Schürzenabschnitt (310) aufweist; wobei der Bodenabschnitt (330) einen horizontalen Abschnitt (331) aufweist und in dem Bodenabschnitt (330) ein umlaufender Kanal (340) gebildet ist;
(b) Ausbringen von fließfähigem Dichtungsmaterial (350) aus einem Ausgang (251) eines Spalts (250) zwischen einem äußeren Element (210) und einem inneren Element (230) einer Maschine (200);
(c) Bewegen einer Vorrichtung (100) in axialer Richtung relativ zu dem äußeren Element (210) und zu dem inneren Element (230), sodass eine Stirnseite (133) der Vorrichtung (100) in Kontakt mit dem aus dem Ausgang (251) ausgebrachten Dichtungsmaterial (350) gerät, das Dichtungsmaterial (350) von dem Ausgang (251) abstreift und das Dichtungsmaterial (350) in dem Gefäßverschluss (300) positioniert; und
(d1) wobei zeitweise während des Bewegens der Vorrichtung (100) ein Abschnitt des inneren Elements (230) der Maschine (200) an einem Abschnitt des Bodenabschnitts (330) des Gefäßverschlusses (300) anliegt und sich ein Abschnitt der Vorrichtung (100) in dem umlaufenden Kanal (340) befindet.

10. Verfahren nach Anspruch 9, wobei zeitweise während des Bewegens der Vorrichtung (100) ein Abschnitt des inneren Elements (230) der Maschine (200) an einem Abschnitt des Bodenabschnitts (330) des Gefäßverschlusses (300) anliegt und sich ein Abschnitt der Vorrichtung (100) axial unterhalb einer Unterseite (235) des inneren Elements (230) befindet.

11. Verfahren nach einem der Ansprüche 9 oder 10, wobei die Stirnseite (133) der Vorrichtung (100) eine erste Fläche (134) und eine zweite Fläche (135) aufweist, wobei die zweite Fläche (135) im Wesentlichen senkrecht zur axialen Bewegungsrichtung der Vorrichtung (100) ist und sich die zweite Fläche (135) zeitweise vollständig in dem umlaufenden Kanal (340) befindet und/oder sich die zweite Fläche (135) zeitweise vollständig axial unterhalb der Unterseite (235) des inneren Elements (230) befindet.

12. Verfahren nach einem der Ansprüche 9 bis 11, wobei der Abschnitt der Vorrichtung (100), der sich zeitweise in dem umlaufenden Kanal (340) befindet, eine axiale Erstreckung von zumindest 0,10 mm, bevorzugt zumindest 0,20 mm, bevorzugter zumindest 0,30 mm, besitzt.

13. Verfahren nach einem der Ansprüche 9 bis 12, wobei der Abschnitt der Vorrichtung (100), der sich zeitweise unterhalb der Unterseite (235) des inneren Elements (230) befindet, eine axiale Erstreckung von zumindest 0,10 mm, bevorzugt zumindest 0,20 mm, bevorzugter zumindest 0,30 mm, besitzt.
